# EUROPEAN PATENT APPLICATION

(11) **EP 4 640 564 A1**
(43) Date of publication of application: **29.10.2025**
(21) Application number: 24172041.6
(22) Date of filing: 24.04.2024
(51) Int. Cl.: B64D 37/04, B64D 37/32

(54) **FUSELAGE AND AIRCRAFT WITH PROTECTOR STRUCTURE**

(71) Applicant: AIRBUS Operations GmbH, 21129 Hamburg (DE)
(72) Inventor: Siemann, Martin, 21129 Hamburg (DE); Benthien, Hermann, 21129 Hamburg (DE)

(57) **Abstract**

Disclosed is a fuselage 100, 200, 300, 400 of or for an aircraft. The fuselage comprises at least one fuel tank 110, 110', 210, 310, 410, at least a portion of which is shielded by a bullet-proof and/or stab-proof protector structure 130, 130', 212ₚ, 320ₚ, 420ₚ comprising at least one soft armour and/or at least one hard armour and/or at least one chain armour and/or at least one metal foil.

Further disclosed is an aircraft comprising such fuselage 100, 200, 300, 400.

## Description

The present invention concerns a fuselage of or for an aircraft. Such fuselage comprises at least one fuel tank. The invention further concerns an aircraft comprising such fuselage.

Aircraft typically comprise one or more fuel tank/s containing a fuel to be supplied to the aircraft's one or more propulsion engine/s and possibly, if installed, to an auxiliary power unit such as, e.g., a turboshaft engine and/or a fuel cell etc. Different positions are known for the tanks, depending on a respective type and design of the aircraft.

Conventionally, the respective fuel may be an aviation gasoline or a jet fuel, for instance. In order to achieve a considerable emission reduction, alternative propulsion systems for aircraft have been researched for. In this respect, hydrogen/electric aircraft engines, any propulsion engine, which includes piston engines, turbine engines of any architecture, and fuel cell powered electrical propulsion motors have emerged as a promising possibility, for instance. In particular, turbo fans and fuel cells/ electric engines respectively powered by hydrogen are being developed as aircraft engines.

The hydrogen employed in such aircraft can be stored and transported in its liquid state in hydrogen tanks (being pressurised vessels configured to contain liquid hydrogen) carried by the respective aircraft.

It is an object of the present invention to provide a fuselage comprising at least one fuel tank and accomplishing an improved safety. It is a further object to provide an aircraft comprising such fuselage.

The object is achieved with a fuselage according to claim 1 and with an aircraft according to claim 10. Advantageous embodiments are disclosed in the dependent claims, the description, and the drawings.

A fuselage according to the present invention forms part of an aircraft or is devised to form part of an aircraft. It comprises at least one fuel tank at least a portion of which is shielded by a bullet-proof and/or stab-proof protector structure comprising at least one soft armour and/or at least one hard armour and/or at least one chain armour and/or at least one metal foil.

In particular, at least a portion of the protector structure may be configured as a laminate comprising at least one bullet-proof layer and at least one stab-proof layer. Additionally or alternatively, the protector structure may comprise at least a portion integrating both its bullet-proof functionality and its stab-proof functionality into a single layer. In such case, said functionalities thus are realised not in a laminated, but in an embedded fashion. Said single layer may be the only one at least in said portion of the protector structure.

The present invention thus provides a specific protection of the at least one fuel tank against potential ballistic threats (such as due to shooting with hand weapons or small arms) and/or against penetrations due to potential crash scenarios (such as penetration by deformed and/or displaced airframe structures and/or by obstacles/ objects on the ground). Thereby, fuel leakage and a damage of a thermal insulation preferably comprised by the at least one tank can be avoided. Moreover, further to its bullet-proof and/or stab-proof functionality, the protector structure may serve as a structural material providing or at least improving stability and strength of the at least one fuel tank and/or of a shell of the fuselage.

The soft armour and/or the hard armour may provide, if comprised by the protector structure, that the protector structure is bullet-proof, whereas the chain armour and/or the at least one metal foil may serve, if comprised by the protector structure, to make the protector structure stab-proof.

As said soft armour, the protector structure may comprise one or various layer/s of woven fabrics (which may comprise synthetic and/or natural fibres). Additionally or alternatively, the protector structure may comprise, as said hard armour, one or various ballistic plate/s which may be made, e.g., of ceramic, metal, plastic, and/or nanomaterial/s. In case of various such ballistic plates, these may be at least partially made of different materials, and/or they may be at least partially stacked and/or at least partially arranged side by side.

According to advantageous embodiments, the protector structure may comprise two or more layers, each of which may be a soft armour, a hard armour, a chain armour, or a metal foil. In particular, the protector structure may be configured as an in-conjunction armour system comprising a combination of said at least one soft armour and said at least one hard armour. Thereby, a particularly effective protection can be achieved.

The protector structure may thus include one or various functional material systems as known in the art of bullet-proof vests.

The at least one fuel tank may in particular be configured as a pressure vessel for containing liquid hydrogen. It may preferably be arranged in an unpressurised aft region of the fuselage. In particular, in embodiments with various fuel tanks, these may be arranged in a caudal tandem configuration.

The fuselage may preferably further comprise a pipe and supply system configured to supply fuel contained in the at least one fuel tank to one or more (main) propulsion engines of the aircraft and/or to an auxiliary power unit eventually further comprised by the aircraft or even the fuselage.

At least a portion of the protector structure may be attached to the shell of the fuselage (at its inner and/or its outer surface), and/or at least a portion of the protector structure may be integrated in the shell of the fuselage. In particular, in case the protector structure comprises a soft armour with a woven (e.g., synthetic and/or natural) fabric, and/or a chain armour as mentioned above, such embodiments facilitate an advantageous ventilation of the shell. The shell may comprise a skin of the fuselage and a reinforcement structure thereof.

The at least one fuel tank may be configured as an integral tank, i.e., it may be at least partially delimited by one or various component/s having a further function in the fuselage. Such tank delimiting component/s may in particular include a portion of a shell of the fuselage.

According to further embodiments, the at least one fuel tank may be a discrete (pressure) vessel and thus be non-integral. In particular, it may preferably be double-walled with an inner tank enclosed by an outer jacket with one or various insulation layer/s in-between. Such insulation layer/s may in particular include at least one vacuum insulation layer and/or at least one foam insulation layer and/or at least one multi-layer insulation layer, for instance.

In such embodiments, the protector structure may be at least partially arranged between the outer jacket and the shell of the fuselage. In particular, at least a portion of the protector structure may form an interface layer between the outer jacket and the shell of the fuselage. For instance, the protector structure may comprise at least a portion which is attached to an outer surface of the outer jacket, and/or at least a portion which is attached to an inner surface of the shell, and/or at least a portion (between the outer jacket and the shell) which is spaced away from both the outer jacket and the shell. These embodiments may advantageously protect the outer jacket from impact deformation and thereby prevent a direct contact of the outer jacket with the inner tank. Furthermore, these embodiments may advantageously protect the insulation layer/s from any destruction or, in case of vacuum insulation, from a loss of vacuum.

Additionally or alternatively, in case of the at least one fuel tank being double-walled, at least a portion of the protector structure may be attached to an inner surface of the outer jacket, and/or at least a portion of the protector structure may be integrated in the outer jacket. Such arrangement in particular facilitates an advantageous further utilisation of the vacuum insulation layer, as therewith, an impacted area may deform into the vacuum insulation layer. Moreover, said integration of the protector structure into the outer jacket facilitates a saving of mass, as the protector structure itself can serve to form at least a portion of the outer jacket, thus having the double function of delimiting the vacuum insulation layer and providing a protective shield of the fuel tank.

According to advantageous embodiments of the present invention, with respect to a direction and an orientation of the fuselage designated for normal flight of the aircraft, at least a portion of the protector structure may preferably at least partially shield the at least one fuel tank downwards and/or sidewards and/or backwards and/or forwards. Indeed, in such circumferential respectively longitudinal directions, the at least one fuel tank is particularly imperilled in case of a potential ballistic threat and/ or in case of a potential crash scenario, such that the shielding is important in particular in these directions.

Preferably, with respect to said orientation designated for normal flight, the protector structure is thinner in a portion above a tank space of the at least one fuel tank than in at least one other protector structure's portion (e.g., a portion below and/or a portion aside from the tank space), or the protector structure is even left out in a region above the tank space. In particular, the protector structure may thus form a clearance above the fuel tank, such that there may be a region above the fuel tank into which the protector structure does not extend. Such embodiments excluding respective upwards protection facilitate a saving of mass while taking into account that a threat in the sense of the present invention from above has only low probability.

In embodiments in which at least a portion of the protector structure is configured as a laminate comprising at least one bullet-proof layer and at least one stab-proof layer as mentioned above, these layers may differ from each other in their extension. In particular, the protector structure may preferably comprise a bullet-proof layer at least partially exceeding the stab-proof layer. Thereby, again a mass saving can be achieved considering that a bullet threat may be present from multiple directions, whereas a danger of a penetration/stabbing is higher at a bottom of the fuselage.

For example, with regard to said orientation and direction designated for normal flight, the protector structure may preferably shield at least a portion of the at least one fuel tank downwards with both its at least one bullet-proof layer and its at least one stab-proof layer. However, it may comprise a region at least partially shielding the at least one fuel tank sidewards only with its at least one bullet-proof layer or only with its stab-proof layer. Additionally or alternatively, it may comprise a region at least partially shielding the at least one fuel tank forwards only with its at least one bullet-proof layer or only with its stab-proof layer, and/or a region at least partially shielding the at least one fuel tank backwards only with its at least one bullet-proof layer or only with its stab-proof layer.

An aircraft according to the present invention comprises a fuselage according to an embodiment of the present invention. In addition, the aircraft preferably comprises an empennage, and/or an undercarriage. The aircraft may further comprise at least two wings extending from the fuselage, or it may be a blended wing body aircraft, for instance.

In what follows, preferred embodiments of the present invention are explained with respect to the accompanying drawings. As is to be understood, the various elements and components are depicted as examples only, may be facultative and/or combined in a manner different than that depicted. Reference signs for related elements are used comprehensively and not necessarily defined again for each figure, and the same holds for evident analogies between the figures.

Shown are schematically in
- Fig. 1a:: a portion of a fuselage according to a first embodiment of the present invention in a longitudinal section;
- Fig. 1b:: the fuselage of Figure 1a in a cross section;
- Fig. 2:: a fuselage according to a second embodiment of the present invention in a cross section;
- Fig. 3:: a fuselage according to a third embodiment of the present invention in a cross section; and
- Fig. 4:: a fuselage according to a fourth embodiment of the present invention in a cross section.

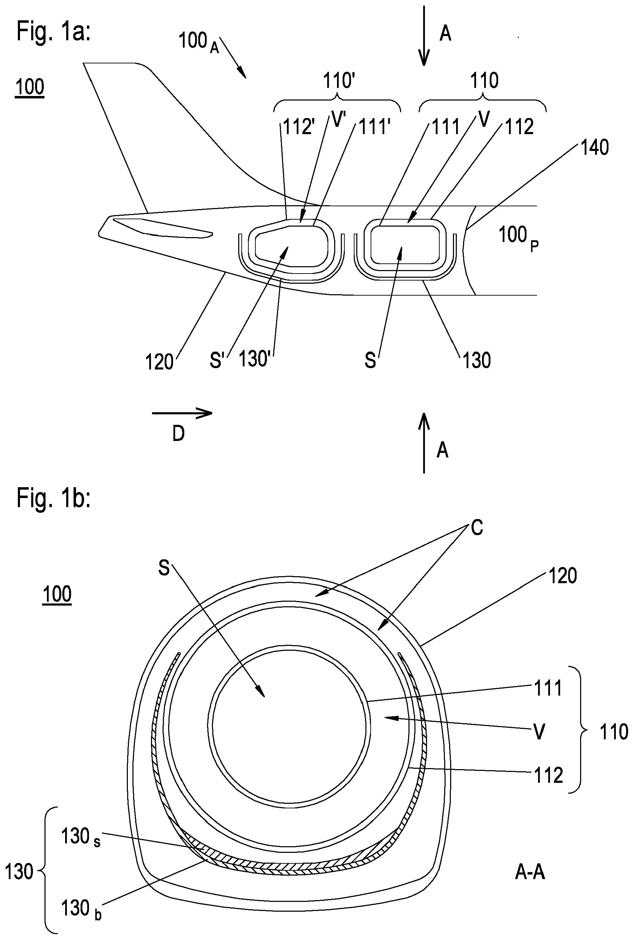

Figure 1a shows a longitudinal section of an unpressurised aft portion 100_{A} and of a rear part of a passenger's compartment 100_{P} of a fuselage 100 according first embodiment of the present invention in an orientation designated for normal flight in a direction D of flight. The aft portion 100_{A} and the passenger's compartment 100_{P} are separated from each other by a pressure bulkhead 140.

In this embodiment, two non-integral double-walled fuel tanks 110, 110' are arranged in caudal tandem configuration within a shell 120 of the fuselage. The fuel tanks 110, 110' each comprise a respective inner tank 111, 111' which encloses a respective tank space S, S' and which is encased by a respective outer jacket 112, 112' with a respective vacuum insulation layer V, V' in-between.

As apparent from Figure 1a, with respect to said orientation and direction D designated for normal flight of the aircraft comprising the fuselage 100, both fuel tanks 110, 110' are shielded downwards, and at least partially backwards and forwards by a respective protector structure 130, 130' which is arranged between the skin 120 of the fuselage and the respective outer jacket 112, 112'. In particular, the protector structures 130, 130' serve to prevent deformations of the outer jackets 112, 112' and, thereby, to inhibit a direct contact of the outer jackets 112, 112' with the respective inner tank 111, 111' in case of a potential ballistic threat or a potential crash scenario.

The protector structures 130, 130' serve to prevent damage (such as a loss of vacuum) to the respective insulation layers V, V', or to prevent leakage of fuel (in particular, of hydrogen, for instance).

As can be further seen in Figure 1b illustrating a cross section of the fuselage 100 along arrows A-A (indicated in Figure 1a), the protector structure 130 further shields the fuel tank 110 sidewards; preferably, the protector structure 130' analogously shields the fuel tank 110' sidewards (not visible in the figures). However, the protector structure 130 forms a clearance C above the fuel tank 110 which thus is unshielded upwards by the protector structure 130 as is, analogously, the fuel tank 110' by the protector structure 130'. Thereby, mass can be saved in view of the low probability of a potential ballistic threat from above and a penetration at the top of the fuselage in a potential crash scenario.

In more detail, and as further seen in Figure 1b, a portion of the protector structure 130 is configured as a laminate of a bullet-proof layer 130_{b} and a stab-proof layer 130ₛ, the latter of which is arranged between the bullet-proof layer 130_{b} and the outer jacket 112 of the fuel tank 110.

Therein, the bullet-proof layer 130_{b} exceeds the stab-proof layer 130ₛ which in the present case shields the fuselage tank 110 mainly downwards. As mentioned above, thereby, the different probabilities of threats - those due to potential ballistic threats on the one hand, and penetrations resulting from potential crash scenarios on the other hand - from the respective directions are taken into account.

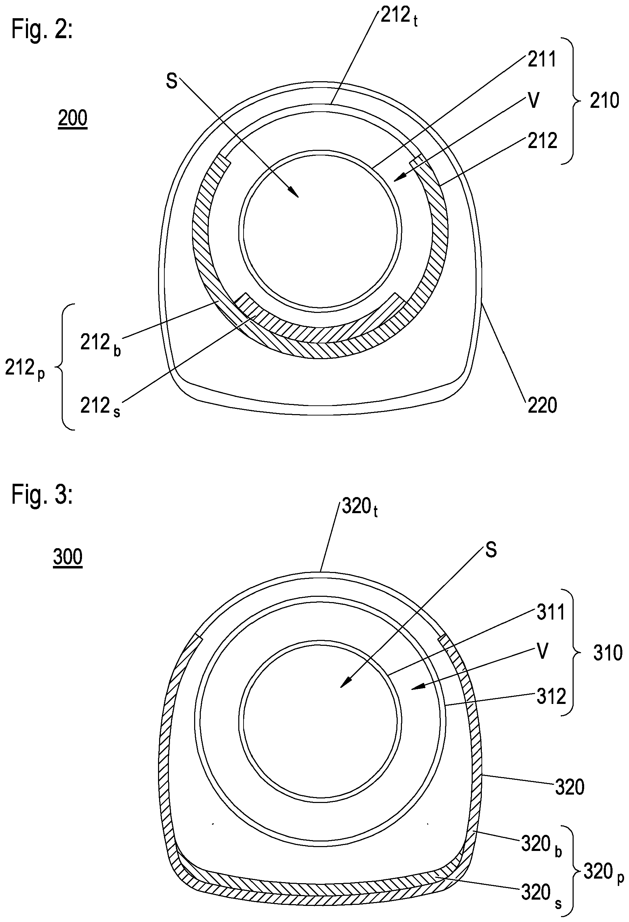

Figure 2 depicts a fuselage 200 according to another embodiment of the present invention in cross section analogous to Figure 1b. The fuselage 200 comprises a shell 220 and a double-walled non-integral fuel tank 210 comprising an inner tank 211 which encloses a tank space S and which is encased by an outer jacket 212 with a respective vacuum insulation layer V in-between.

Moreover, the fuselage 200 comprises a protector structure 212ₚ which in this case is integrated in the outer jacket 212 of the fuel tank 210. As a consequence, in particular, an impacted area of the protector structure 212ₚ may advantageously deform into the vacuum insulation layer V.

With respect to the direction and the illustrated orientation designated for normal flight, the protector structure 212ₚ shields the fuel tank 210 downwards and sidewards. Preferably, though not visible in Figure 2, the protector structure 212ₚ further shields the fuel tank 210 forwards and backwards. However, the protector structure 212ₚ is left out in a region above the tank space S of the fuel tank 210. Accordingly, a top portion 212ₜ of the outer jacket 212 is devoid of the protector structure 212ₚ (in particular, of a soft armour, of a ballistic plate, and of a chain armour one or various of which the protector structure 212ₚ may preferably comprise).

Similarly to the embodiment shown in Figure 1b, a portion of the protector structure 212ₚ is configured as a laminate of a bullet-proof layer 212_{b} and a stab-proof layer 212ₛ, the latter of which in this case is arranged between the bullet-proof layer 212_{b} and the inner tank 211 of the fuel tank 210.

The bullet-proof layer 212_{b} exceeds the stab-proof layer 212ₛ which in the present case shields the fuselage tank 210 mainly downwards, which in particular yields the above-mentioned advantages of mass saving.

In Figure 3, a fuselage 300 according to a third embodiment of the present invention is shown in a cross section analogous to Figures 1b and 2.

The fuselage 300 comprises a shell 320 and a double-walled non-integral fuel tank 310 with an inner tank 311 which encloses a tank space S and which is encased by an outer jacket 312 with a respective vacuum insulation layer V in-between.

The fuel tank 310 is partially shielded by a protector structure 320ₚ which in this case is integrated in the shell 320 of the fuselage 300. Thereby, an advantageous ventilation of the shell, in particular through a soft armour with a woven (e.g., synthetic and/or natural) fabric, and/or through a chain armour preferably comprised (though not visible in Figure 3) by the protector structure 320ₚ.

With respect to the direction and the illustrated orientation designated for normal flight, the protector structure 320ₚ shields the fuel tank 310 downwards and sidewards. Preferably, though not visible in Figure 3, the protector structure 320ₚ further shields the fuel tank 310 forwards and backwards. However, a top portion 320ₜ of the shell 320 is devoid of the protector structure 320ₚ (in particular, of a soft armour, of a ballistic plate, and of a chain armour one or various of which the protector structure 320ₚ may preferably comprise) which thus is left out in a region above the tank space S of the fuel tank 310.

Similar to the embodiments described above, a portion of the protector structure 320ₚ is configured as a laminate of a bullet-proof layer 320_{b} and a stab-proof layer 320ₛ, the latter of which is arranged between the bullet-proof layer 320_{b} and the outer jacket 312 of the fuel tank 310.

The bullet-proof layer 320_{b} exceeds the stab-proof layer 320ₛ which in the present case shields the fuselage tank 310 mainly downwards. Thereby, the above-mentioned advantages of mass saving can be achieved.

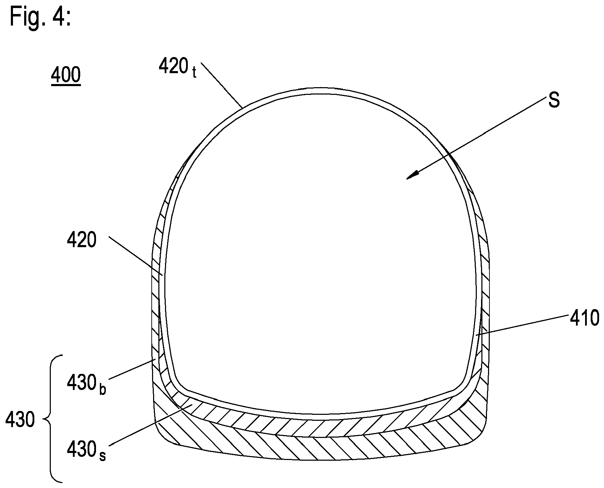

In Figure 4, a fuselage 400 according to a fourth embodiment of the present invention is shown in cross section analogous to Figures 1b, 2 and 3.

The fuselage 400 comprises a shell 420 and a fuel tank 410 which in this embodiment is configured as an integral tank with a tank space S which is at least partially delimited by the shell 420. The tank 410 is partially shielded by a protector structure 430 which in this case is attached to an outer surface of the shell 420; as is to be understood, additionally or alternatively, at least a portion of the protector structure might be attached to an inner surface of the shell 420, or integrated into the shell analogously to the case shown in Figure 3 for a non-integral tank.

With respect to the direction and the illustrated orientation designated for normal flight, the protector structure 430 shields the fuel tank 410 downwards and sidewards. Preferably, though not visible in Figure 4, the protector structure 430 further shields the fuel tank 410 forwards and backwards. However, a top region 410ₜ of the shell 420 is devoid of the protector structure 430 (in particular, of a soft armour, of a ballistic plate, and of a chain armour one or various of which the protector structure 430 may preferably comprise) which thus is left out in a region above the tank space S of the fuel tank 410.

A portion of the protector structure 430 is configured as a laminate of a bullet-proof layer 430_{b} and a stab-proof layer 430ₛ, which in this case is arranged between the bullet-proof layer 430_{b} and the shell 420.

The bullet-proof layer 430_{b} exceeds the stab-proof layer 430ₛ which in the present case shields the fuselage tank 410 mainly downwards and, in a lower region, sidewards. Thereby, the above-mentioned advantages of mass saving can be achieved.

Disclosed is a fuselage 100, 200, 300, 400 of or for an aircraft. The fuselage comprises at least one fuel tank 110, 110', 210, 310, 410, at least a portion of which is shielded by a bullet-proof and/or stab-proof protector structure 130, 130', 212ₚ, 320ₚ, 430 comprising at least one soft armour and/or at least one hard armour and/or at least one chain armour and/or at least one metal foil.

Further disclosed is an aircraft comprising such fuselage 100, 200, 300, 400.

### Reference signs

- 100: fuselage
- 100_{A}: aft portion of the fuselage 100
- 100_{P}: passenger section of the fuselage 100
- 110, 110': fuel tank
- 111, 111': inner tank
- 112, 112': outer jacket
- 120: shell
- 130, 130': protector structure
- 130_{b}: bullet-proof layer (of the protector structure 130)
- 130ₛ: stab-proof layer (of the protector structure 130)
- 140: pressure bulkhead

- 200: fuselage
- 210: fuel tank
- 211: inner tank
- 212: outer jacket
- 212_{b}: bullet-proof layer (of the protector structure 212ₚ)
- 212ₛ: stab-proof layer of the (protector structure 212ₚ)
- 212ₚ: protector structure (integrated in the outer jacket 212)
- 212ₜ: top portion of the outer jacket 212
- 220: shell

- 300: fuselage
- 310: fuel tank
- 311: inner tank
- 312: outer jacket
- 320: shell
- 320_{b}: bullet-proof layer (of the protector structure 320ₚ)
- 320ₛ: stab-proof layer of the (protector structure sheathing 320ₚ)
- 320ₚ: protector structure (integrated in the shell 320)
- 320ₜ: top portion of the shell 320

- 400: fuselage
- 410: fuel tank
- 420: shell

- 420t: top portion of the shell 420
- 430: protector structure
- 430_{b}: bullet-proof layer (of the protector structure 430)
- 430ₛ: stab-proof layer (of the protector structure 430)

- C: clearance
- S, S': tank space
- V, V': vacuum insulation layer

## Claims

1. Fuselage (100, 200, 300, 400) of or for an aircraft, the fuselage comprising at least one fuel tank (110, 110', 210, 310, 410) at least a portion of which is shielded by a bullet-proof and/or stab-proof protector structure (130, 130', 212ₚ, 320ₚ, 420ₚ) comprising at least one soft armour and/or at least one hard armour and/or at least one chain armour and/or at least one metal foil.

2. Fuselage (400) according to claim 1, wherein a tank wall of the at least one fuel tank (410) is at least partially formed by a shell (420) of the fuselage, and the protector structure (420ₚ) is at least partially attached to and/or integrated in the shell (420) of the fuselage.

3. Fuselage (100, 200, 300) according to one of claims 1 or 2, wherein the at least one fuel tank comprises an inner tank (111, 211, 311) and an outer jacket (112, 212, 312) which is enclosed by a shell (120, 220, 320) of the fuselage and which encases the inner tank with at least one insulation layer (V) in-between, and wherein
- the protector structure (130) is at least partially arranged between the outer jacket (112) and the shell (120) of the fuselage, and/or
- the protector structure (212p) is at least partially attached to and/or integrated in the outer jacket, and/or
- the protector structure (320p) is at least partially attached to and/or integrated in the shell (320) of the fuselage.

4. Fuselage according to one of the preceding claims, wherein the protector structure (130, 130', 212ₚ, 320ₚ, 420ₚ) is at least partially configured as a laminate comprising at least one bullet proof layer (130_{b}, 212_{b}, 320_{b}, 430_{b}) and a stab-proof layer (130ₛ, 212ₛ, 320ₛ, 430ₛ).

5. Fuselage according to claim 4, wherein
- the bullet-proof layer (130_{b}, 212_{b}, 320_{b}, 430_{b}) comprises a region in which it extends over the stab-proof layer (130ₛ, 212ₛ, 320ₛ, 430ₛ); and/or
- the stab-proof layer comprises a region in which it extends over the bullet-proof layer.

6. Fuselage according to claim 4, wherein the bullet-proof layer and the stab-proof layer coincide in their respective extent.

7. Fuselage according to one of the preceding claims, wherein the protector structure comprises at least a portion integrating both its bullet-proof functionality and its stab-proof functionality into a single layer.

8. Fuselage according to one of the preceding claims, wherein with respect to a fuselage orientation and direction (D) designated for normal flight, at least a portion of the protector structure (130, 130', 212ₚ, 320ₚ, 420ₚ) at least partially shields the at least one fuel tank (110, 110', 210, 310, 410) downwards and/or sidewards and/or rearwards and/or forwards.

9. Fuselage according to one of the preceding claims, wherein the at least one fuel tank is configured as a pressure vessel for containing liquid hydrogen.

10. Aircraft comprising a fuselage (100) according to one of the preceding claims.
